# EUROPÄISCHE PATENTSCHRIFT

(11) **EP 2 461 980 B1**
(45) Veröffentlichungstag und Bekanntmachung des Hinweises auf die Patenterteilung: **06.07.2016**
(21) Anmeldenummer: 10751824.3
(22) Anmeldetag: 04.08.2010
(51) Int. Cl.: B41F 17/08, B41F 33/02, B41J 3/407, G01B 7/02

(54) **VORRICHTUNG UND VERFAHREN ZUR OBERFLÄCHENBEARBEITUNG MIT EINER PRÜFSTATION**
DEVICE AND METHOD FOR SURFACE PROCESSING HAVING A TEST STATION
DISPOSITIF ET PROCÉDÉ POUR LE TRAITEMENT DE SURFACE AVEC UNE STATION D'ESSAI

(30) Priorität: 04.08.2009 DE 102009028228
(43) Veröffentlichungstag der Anmeldung: 13.06.2012
(73) Patentinhaber: Ball Europe GmbH, 8050 Zürich (CH)
(72) Erfinder: NOLL, Werner, 56412 Huebingen (DE); KREUTZ, Patrick, 56072 Koblenz (DE)
(74) Vertreter: Eisenführ Speiser
(86) Internationale Anmeldenummer: PCT/EP2010/061369
(87) Internationale Veröffentlichungsnummer: WO 2011/015608

(56) Entgegenhaltungen:
- WO-A2-03/106177
- CH-A5- 695 555
- JP-A- H0 552 817
- US-A- 4 915 237

## Beschreibung

Die Erfindung betrifft eine Vorrichtung zur Oberflächenbearbeitung von Gegenständen mit rundlichem Querschnitt und einer wenigstens teilweise elektrisch leitenden Außenwand, mit einer Mehrzahl von Bearbeitungsstationen und einer Fördervorrichtung mit Haltevorrichtungen zum Halten zu bearbeitender Gegenstände, wobei die Fördervorrichtung ausgebildet ist, von einer jeweiligen Haltevorrichtung gehaltene Gegenstände taktweise von einer Bearbeitungsstation zur nächsten zu transportieren.

Die Erfindung betrifft weiterhin eine Prüfstation für eine Vorrichtung zur Oberflächenbearbeitung von Gegenständen mit rundlichem Querschnitt und einer wenigstens teilweise elektrisch leitenden Außenwand sowie ein Verfahren zur Oberflächenbearbeitung von Gegenständen mit rundlichem Querschnitt und einer wenigstens teilweise elektrisch leitenden Außenwand, umfassend die Schritte temporäres Anordnen von zu bearbeitenden Gegenständen an Haltevorrichtungen einer Fördervorrichtung sowie taktweises Transportieren der von der jeweiligen Haltevorrichtung gehaltenen Gegenstände von einer Bearbeitungsstation zur nächsten durch die Fördervorrichtung.

Gegenstände mit rundlichem Querschnitt und einer wenigstens teilweise elektrisch leitenden Außenwand sind beispielsweise Getränkedosen aus Metall, vorzugsweise aus Aluminium oder Weißblech. Vorzugsweise sind die Gegenstände rotationssymmetrisch ausgebildet, z.B. als einteilige hohlzylindrische Behälter mit einem offenen Ende und einem geschlossenen Ende. Vorzugsweise wird nur die Außenwand des Hohlzylinders bearbeitet, nicht auch die Außenfläche des geschlossenen Endes.

Die Oberflächen der Außenwände von Getränkedosen werden üblicherweise vor dem Befüllen der Getränkedosen mit Füllgut und dem Verschließen der Getränkedosen mit einem Dosendeckel in einer eingangs genannten Vorrichtung zur Oberflächenbearbeitung bearbeitet. Solche Vorrichtungen sind beispielsweise Taktapparate, bei denen eine Mehrzahl von Bearbeitungsstationen mit vorzugsweise gleichen Abständen entlang der Transportrichtung der Gegenstände angeordnet ist. Haltevorrichtungen zum Halten der Gegenstände sind ebenfalls mit vorzugsweise gleichen Abständen entlang der Transportrichtung der Gegenstände angeordnet, so dass die von den Haltevorrichtungen gehaltenen Gegenstände parallel von den jeweiligen Bearbeitungsstationen bearbeitet und taktweise von der Fördervorrichtung zur jeweils nächsten Bearbeitungsstation transportiert werden. Zwischen der Oberfläche der Außenwand der Gegenstände und den Bearbeitungsstationen besteht jeweils ein Zwischenraum bzw. Spalt, der beispielsweise in der Oberflächenbearbeitung von Getränkedosen je nach durchzuführender Bearbeitung weniger als 1 mm betragen kann.

Die an den Bearbeitungsstationen zur Bearbeitung der jeweiligen Gegenstände verfügbare Zeit entspricht der Taktzeit abzüglich der benötigten Transportzeit von einer zur nächsten Bearbeitungsstation und ist daher begrenzt.

Mögliche Bearbeitungsschritte an den Bearbeitungsstationen sind beispielsweise das Bedrucken, Trocknen und/oder Lackieren der Gegenstände. Zur Durchführung dieser Bearbeitungsschritte sind die Bearbeitungsstationen mit entsprechenden Werkzeugen bzw. Bearbeitungskomponenten ausgestattet. Diese Werkzeuge bzw. Komponenten sind häufig teure Präzisionsgeräte, die leicht beschädigt werden können. Insbesondere bei kurzen Taktzeiten und einer hohen Bearbeitungsgeschwindigkeit treten an den eingangs genannten Vorrichtungen immer wieder Schäden an den Bearbeitungsstationen auf, die in nachteiliger Weise zu Störungen im Bearbeitungsablauf und Ausfällen einer oder mehrerer der Bearbeitungsstationen bzw. der gesamten Vorrichtung führen. Durch diese Ausfallzeiten entstehen hohe Kosten, eben so wie durch einen erhöhten Ausschuss und/oder aufwändige Reparaturen.

Die WO 03/106177 A2 offenbart eine Vorrichtung zur Oberflächenbearbeitung von Teilen, die eine vorgegebenen Anzahl von Bearbeitungsprozessen durchführenden Bearbeitungsstationen und eine Bearbeitungsbewegungen ausführende Fördereinheit aufweist. Mittels der Fördereinheit werden die Teile in vorgegebene Sollpositionen an den Bearbeitungsstationen transportiert. Die Vorrichtung weist weiterhin eine zentrale Steuereinheit auf, mittels derer die Bearbeitungsbewegungen der Fördereinheit und die Bearbeitungsprozesse der Bearbeitungsstationen synchronisiert werden, in dem über die zentrale Steuereinheit für jede Bearbeitungsstation ein mit der Bearbeitungsbewegung des zu bearbeitenden Teils korrelierter, den jeweiligen Bearbeitungsprozess steuernder Takt vorgebbar ist. Die JP 05052817 offenbart eine Vorrichtung zum Überprüfen von Defekten einer inneren Beschichtung einer nahtlosen Metalldose mit einer Hülse zur Aufnahme einer Metalldose, einem Elektrodenanschluss und einer Gleichstromquelle zur Bereitstellung einer Hochspannungs-Gleichstromspannung zwischen der Hülse und dem Elektrodenanschluss, wobei ein Defekt der inneren Beschichtung festgestellt werden kann auf Basis des zwischen der Hülse und dem Elektrodenanschluss fließenden Stroms.

Es ist daher die Aufgabe der vorliegenden Erfindung, eine Vorrichtung und ein Verfahren zur Oberflächenbearbeitung von Gegenständen mit rundlichem Querschnitt und einer wenigstens teilweise elektrisch leitenden Außenwand anzugeben, mit der bzw. dem eine oder mehrere der genannten Nachteile vermindert oder beseitigt wird bzw. werden.

Erfindungsgemäß wird diese Aufgabe gelöst durch eine Prüfstation gemäß Anspruch 1, eine Vorrichtung gemäß Anspruch 6 sowie ein Verfahren gemäß Anspruch 9.

Der Erfindung liegt die Erkenntnis zugrunde, dass Schäden an den Bearbeitungsstationen häufig durch Unregelmäßigkeiten, wie beispielsweise Auswölbungen, Beulen oder Sicken, in der Oberfläche der Außenwand bzw. Außenkontur der zu bearbeitenden Gegenstände verursacht werden. Aufgrund des sehr engen Spalts zwischen den Bearbeitungsstationen und der Oberfläche der Außenwand der Gegenstände können bereits kleine Unregelmäßigkeiten in der Oberfläche der Außenwand bzw. der Außenkontur der Gegenstände von beispielsweise weniger als ½ mm zu Beschädigungen an den Bearbeitungsstationen führen. Weiterhin können diese Unregelmäßigkeiten dazu führen, dass die Bearbeitung der entsprechenden Gegenstände nicht mit der erforderlichen Qualität sichergestellt werden kann, so dass ein erhöhter Ausschuss produziert wird. Für den Fall, dass eine oder mehrere der Bearbeitungsstationen beschädigt wird bzw. werden, ist zur Reparatur der Bearbeitungsstationen meist eine Unterbrechung des Betriebs der Vorrichtung erforderlich, die - neben den Reparaturkosten - zu hohen Ausfallkosten führen kann.

Beispielsweise beträgt der Abstand zwischen Gegenständen und einem Druckkopf einer als Druckstation zum digitalen Bedrucken von Gegenständen ausgebildeten Bearbeitungsstation etwa 0,6 mm ± 0,2 mm. Durch Unregelmäßigkeiten in der Oberfläche der Außenwand der Gegenstände kann der Abstand stellenweise weniger als 0,3 mm betragen. Dadurch können Beschädigungen an der Bearbeitungsstation entstehen, wenn beispielsweise eine Auswölbung in der Oberfläche der Außenwand des Gegenstands mit der Bearbeitungsstation in Berührung kommt. Weiterhin kann die Qualität der Überarbeitungsergebnisse sinken, wenn der Abstand zwischen der Oberfläche der Außenwand der Gegenstände und der Bearbeitungsstation zu klein ist. Beispielsweise werden bei einer digitalen Druckstation nur sehr schlechte Druckergebnisse erzielt, wenn der Abstand zwischen der Oberfläche der Außenwand des Gegenstands und dem Druckkopf der Druckstation weniger als 0,25 mm beträgt.

Diese Nachteile können durch die erfindungsgemäße Vorrichtung vermieden werden, da erfindungsgemäß eine der Bearbeitungsstationen eine Prüfstation ist, die dazu dient, Unregelmäßigkeit in der Oberfläche der Außenwand bzw. der Außenkontur der Gegenstände zu detektieren. Erfindungsgemäß weist die Prüfstation dazu eine Spannungsquelle, eine mit der Spannungsquelle gekoppelte Elektrode und eine Auswerteeinheit auf. Über die Spannungsquelle wird eine Spannung zwischen einem jeweiligen sich an der Prüfstation befindlichen Gegenstand und der mit der Spannungsquelle gekoppelten Elektrode aufgebaut. Unregelmäßigkeiten in der Oberfläche der Außenwand bzw. der Außenkontur der Gegenstände führen zu Spannungsänderungen zwischen der Elektrode und dem Gegenstand. Erfindungsgemäß ist die Auswerteeinheit ausgebildet, diese Spannungsänderungen zu detektieren. Auf diese Weise können Unregelmäßigkeiten in der Oberfläche der Außenwand bzw. der Außenkontur der Gegenstände schnell und zuverlässig ermittelt werden, ohne dass ein direkter Kontakt zwischen der Prüfstation und der Oberfläche der Außenwand der Gegenstände erforderlich ist.

Im Gegensatz zu anderen möglichen Lösungen zur Detektion von Oberflächenunregelmäßigkeiten, wie beispielsweise einer optischen Detektion mittels einer Kamera oder einer Detektion mittels eines Laserscanner, hat die vorliegende Erfindung den Vorteil, dass sie einfach und kostengünstig realisiert werden kann und ohne großen Aufwand in den stark begrenzten zur Verfügung stehenden Raum innerhalb der Vorrichtung integriert werden kann. Weiterhin ist die erfindungsgemäße Prüfstation, im Gegensatz zu anderen mögliche Lösungen, in der Lage, eine zuverlässige Detektion auch innerhalb der nur sehr kurzen zur Verfügung stehenden Zeit zu gewährleisten.

Ein weiterer Vorteil der erfindungsgemäßen Vorrichtung liegt darin, dass mit der Detektion der Spannungsänderungen zwischen der Elektrode und einem jeweiligen sich an der Prüfstation befindlichen Gegenstand durch die Auswerteeinheit Informationen über die Beschaffenheit der Gegenstände erzeugt werden, die für den weiteren Bearbeitungsprozess verwendet werden können.

Vorzugsweise wird die Auswerteeinheit ausgebildet, die detektierten Spannungsänderungen so auszuwerten, dass Rückschlüsse auf Art und/oder Ausmaß der Unregelmäßigkeiten in der Oberfläche der Außenwand bzw. der Außenkontur der Gegenstände gezogen werden können.

Vorzugsweise ist die Prüfstation so kalibriert, dass Unregelmäßigkeiten in der Oberfläche der Außenwand der Gegenstände mit einem Höhenzuwachs von weniger als 500 µm detektiert werden können. Weiterhin vorzugsweise beträgt die Zeit zur Detektion der Spannungsänderungen und damit der Oberflächenunregelmäßigkeiten weniger als 1 µs.

Vorzugsweise weist die Elektrode in Längsrichtung die gleiche Länge auf wie ein jeweiliger sich an der Prüfstation befindlicher Gegenstand in Längsrichtung. Auf diese Weise kann sichergestellt werden, dass der Gegenstand über seine gesamte Länge hinsichtlich Unregelmäßigkeiten in der Oberfläche seiner Außenwand geprüft werden kann. Bestimmte Getränkedosen als zu bearbeitende Gegenstände beispielweise können eine Länge bzw. Höhe von 160mm aufweisen, so dass auch eine entsprechende Länge der Elektrode bevorzugt ist, um die gesamte Länge bzw. Höhe der Getränkedosen erfassen zu können.

Weiterhin vorzugsweise ist die Kontur der Elektrode der Kontur der zu bearbeitenden Gegenstände angepasst bzw. kann die Kontur der Elektrode an die Kontur der zu bearbeitenden Gegenstände angepasst werden. Auf diese Weise ist es möglich, unterschiedlich geformte Gegenstände mit der Prüfstation zu prüfen.

Vorzugsweise ist die Prüfstation einer oder mehreren Bearbeitungsstationen vorgelagert, so dass Unregelmäßigkeiten in der Oberfläche der Außenwand der Gegenstände detektiert werden können, bevor die Gegenstände an weiteren Bearbeitungsstationen bearbeitet werden. Auf diese Weise kann in vorteilhafter Weise die weitere Bearbeitung gestoppt und/oder Gegenstände mit Unregelmäßigkeiten aussortiert werden, wenn die detektierten Unregelmäßigkeiten einen bestimmten Wert überschreiten, insbesondere wenn die Oberfläche der Außenwand der Gegenstände Verwölbungen oder Ausbuchtungen aufweist, die größer sind als der Abstand zwischen der Oberfläche der Außenwand der Gegenstände und den Bearbeitungsstationen. Insbesondere ist es bevorzugt, dass eine der Bearbeitungsstationen eine Druckstation ist, die in Transportrichtung der Fördervorrichtung der Prüfstation nachgelagert ist und die ausgebildet ist, eine Oberfläche eines jeweiligen sich an der Druckstation befindlichen Gegenstands mit flüssiger Farbe zu bedrucken. Eine solche Druckstation weist hochempfindliche Druckköpfe auf, die sich in sehr geringem Abstand über der Oberfläche der Außenwand eines jeweiligen sich an der Druckstation befindlichen Gegenstands befinden. Unregelmäßigkeiten in der Oberfläche der Außenwand der Gegenstände können an einer Druckstation große Schäden verursachen und zu minderwertigen Druckergebnissen führen, so dass das Vorsehen einer erfindungsgemäßen Prüfstation vor einer Druckstation besonders bevorzugt ist.

Vorzugsweise ist die Auswerteeinheit ausgebildet ist, ein Signal zu generieren, wenn eine Spannungsänderung zwischen der Elektrode und einem jeweiligen sich an der Prüfstation befindlichen Gegenstand detektiert wird und/oder wenn eine zwischen der Elektrode und einem jeweiligen sich an der Prüfstation befindlichen Gegenstand detektierte Spannungsänderung einen bestimmten Grenzwert über- bzw. unterschreitet.

Das Generieren eines Signals durch die Auswerteeinheit beim Auftreten einer Spannungsänderung bzw. beim Abweichen einer detektierten Spannungsänderung von einem bestimmten Grenzwert oder Grenzwertbereich bietet in vorteilhafter Weise die Möglichkeit, dieses Signal weiter zu verwenden, insbesondere in der Steuerung der Vorrichtung. Das Signal kann beispielsweise dazu dienen, die Vorrichtung zu stoppen und die weitere Bearbeitung der Gegenstände zu unterbrechen, um eine Beschädigung der Bearbeitungsstationen durch einen Gegenstand mit Unregelmäßigkeiten in der Oberfläche der Außenwand zu verhindern.

Weiterhin vorzugsweise ist die Vorrichtung ausgebildet, einen zu bearbeitenden Gegenstand von der jeweiligen Haltevorrichtung zu entfernen, wenn an der Prüfstation eine Spannungsänderung zwischen der Elektrode und dem Gegenstand detektiert wird und/oder wenn eine an der Prüfstation zwischen der Elektrode und dem Gegenstand detektierte Spannungsänderung einen bestimmten Grenzwert über- bzw. unterschreitet.

Der bestimmte Grenzwert, der nicht über- bzw. unterschritten werden soll, bzw. der einzuhaltende Grenzwertbereich, ist vorzugsweise derart gewählt, dass unkritische Unregelmäßigkeiten zu keinem Signal bzw. keinem Entfernen des Gegenstands führen, kritische Unregelmäßigkeiten - d.h. solche, die zu Beschädigungen oder Qualitätseinbußen führen könnten - jedoch zur Generierung eines Signals führen.

Eine besonders bevorzugte Maßnahme bei Detektion einer Spannungsänderung und/oder bei Abweichen einer detektierten Spannungsänderung von einem bestimmten Grenzwert bzw. Grenzwertbereich ist es, den jeweiligen die Spannungsänderung hervorrufenden Gegenstand von der Haltevorrichtung zu entfernen. Dies kann vorzugsweise durch Abstoßen des Gegenstands von der Haltevorrichtung mittels Druckluft erfolgen. Das Entfernen eines Gegenstands mit Unregelmäßigkeiten in der Oberfläche der Außenwand hat den Vorteil, dass eine Unterbrechung der Bearbeitung der Gegenstände durch die Vorrichtung nicht erfolgen muss und gleichzeitig eine Beschädigung der Vorrichtung durch einen Gegenstand mit Unregelmäßigkeiten in der Oberfläche der Außenwand verhindert werden kann. Auf diese Weise können Ausfallzeiten und damit verbundene Kosten aufgrund von Betriebsunterbrechungen der Vorrichtung - sowohl basierend auf Beschädigungen der Bearbeitungsstationen als auch basierend auf Bearbeitungsstopps, die durch die Detektion von Gegenständen mit Unregelmäßigkeiten in der Oberfläche der Außenwand initiiert sind - verhindert werden.

Besonders bevorzugt ist es, dass als Dielektrikum zwischen der Elektrode und einem jeweiligen sich an der Prüfstation befindlichen Gegenstand Luft verwendet wird. Auf diese Weise kann auf die Bereitstellung von anderen Dielektrika, wie beispielsweise flüssige Elektrolyte, an der Prüfstation verzichtet werden.

Weiterhin erfindungsgemäß weist die Prüfstation Mittel zum Einstellen des Abstands zwischen der Elektrode und einem jeweiligen sich an der Prüfstation befindlichen Gegenstand auf. Durch die Variation des Abstands der Elektrode von der Oberfläche der Außenwand eines jeweiligen Gegenstands kann die Prüfstation auf unterschiedliche Gegenstände angepasst werden und der Abstand so gewählt werden, dass unschädliche, insbesondere sehr kleine Unregelmäßigkeiten in der Oberfläche der Außenwand der Gegenstände die Prüfstation passieren können. Bei der Prüfung von Getränkedosen ist der Abstand zwischen der Elektrode und der Oberfläche der Außenwand der Getränkedose auf ca. 300 µm einstellbar. Die Elektrode wird vorzugsweise der Kontur des Objektes angepasst, wobei der Abstand zwischen Objekt und Elektrode vorzugsweise konstant ist.

Vorzugsweise ist die Spannungsquelle eine Gleichspannungsquelle, weiterhin vorzugsweise eine Hochspannungs-Gleichspannungsquelle. Es ist bevorzugt, dass an der Elektrode eine einstellbare Hochspannung von ca. 200 bis 800 V Gleichspannung anliegt. Weiterhin vorzugsweise ist die Spannungsquelle hochohmig ausgebildet, um aus Sicherheitsgründen einen möglichst geringen Ableitstrom, vorzugsweise im Mikroamperebereich, zu erzeugen.

Durch Unregelmäßigkeiten in der Oberfläche der Außenwand der Gegenstände, wie beispielsweise Ausbuchtungen, Vorwölbungen oder Beulen, verändert sich der Abstand zwischen der Elektrode und dem Gegenstand, so dass sich ein Lichtbogen zwischen dem Gegenstand und der Elektrode bildet und ein Kurzschluss entsteht und es zu einer Entladung, insbesondere einem Überschlag, zwischen der Elektrode und dem Gegenstand kommt. Durch kontinuierliches Messen der anliegenden Hochspannung, die bei gleichmäßiger Oberfläche der Außenwand der Gegenstände im Wesentlichen konstant ist, können Spannungsänderungen durch die Entladung aufgrund von Oberflächenunregelmäßigkeiten erkannt werden. Durch eine geeignete Wahl des Abstands des Gegenstands von der Elektrode und der Hochspannung kann vorzugsweise eine Grenze, insbesondere ein Grenzwert, definiert werden, ab der bzw. dem Unregelmäßigkeiten in der Oberfläche der Außenwand der Gegenstände detektiert werden.

Weiterhin erfindungsgemäß ist die Prüfstation ausgebildet, Spannungsänderungen zwischen der Elektrode und einem jeweiligen sich an der Prüfstation befindlichen Gegenstand zu detektieren, ohne dass eine Berührung der Elektrode und einem jeweiligen sich an der Prüfstation befindlichen Gegenstand erforderlich ist. Dadurch ist es möglich, nicht nur solche Unregelmäßigkeiten in der Oberfläche der Außenwand der Gegenstände zu detektieren, die größer sind als der Abstand zwischen der Elektrode einem jeweiligen sich an der Prüfstation befindlichen Gegenstand und damit zu einer berührenden Detektion führen, sondern auch solche Unregelmäßigkeiten in der Oberfläche der Außenwand der Gegenstände zu detektieren, die kleiner sind als der Abstand zwischen der Elektrode einem jeweiligen sich an der Prüfstation befindlichen Gegenstand und diesen Abstand somit nur verringern und berührungslos detektiert werden. Auf diese Weise ist eine genauere Detektion unterschiedlicher Unregelmäßigkeiten in der Oberfläche der Außenwand der Gegenstände möglich. Es ist damit sowohl eine berührende als auch eine berührungslose Detektion von Spannungsänderungen zwischen der Elektrode und einem jeweiligen sich an der Prüfstation befindlichen Gegenstand möglich.

Vorzugsweise ist die Haltevorrichtung so ausgebildet, dass ein jeweiliger von der Haltevorrichtung gehaltener Gegenstand geerdet ist, wenn er sich an der Prüfstation befindet.

Vorzugsweise ist die Elektrode als Kammelektrode mit einer Vielzahl von Kammspitzen ausgebildet, wobei vorzugsweise der Abstand zwischen zwei benachbarten Kammspitzen weniger als 1 mm, insbesondere ca. 0,5 mm, beträgt. Die Ausbildung der Elektrode als Kamm ist besonders bevorzugt, um das elektrische Feld an den Spitzen der Elektrode, die vorzugsweise dem Gegenstand zugewandt sind, zu konzentrieren. Die Ausbildung der Elektrode als Kamm hat weiterhin den Vorteil, dass zwischen der Kammelektrode und dem Gegenstand an den Kammspitzen ein höheres Potential besteht und die Abstandsveränderung leichter erkannt werden kann.

Vorzugsweise sind die Haltevorrichtungen ausgebildet, einen jeweiligen gehaltenen Gegenstand um eine jeweilige Rotationsachse zu rotieren. Insbesondere bei rotationssymmetrischen Gegenständen ist es bevorzugt, diese auf den jeweiligen Haltevorrichtungen zu rotieren, so dass die Bearbeitungsstationen ortsfest ausgebildet sein können und gleichzeitig die gesamte Außenoberfläche der rotationssymmetrischen Gegenstände bearbeitet werden kann. Bei Getränkedosen ist die zu bearbeitende bzw. zu prüfende Oberfläche die Länge bzw. Höhe der Getränkedose multipliziert mit deren Umfang. Bei einer vorzugsweise auf die Länge bzw. Höhe einer Getränkedose angepassten Elektrode kann in vorteilhafter Weise die gesamte Außenwand der Getränkedose durch Rotation der Getränkedose geprüft werden. Die Rotationsgeschwindigkeit der Gegenstände auf den jeweiligen Haltevorrichtungen beträgt vorzugsweise ca. 300 U/min. Insbesondere bei solchen hohen Rotationsgeschwindigkeiten ist es von Vorteil, dass die erfindungsgemäße Prüfvorrichtung mit einer sehr kurzen Detektionszeit von weniger als 1 µs bei 300 U/min arbeitet.

Ein weiterer Aspekt der Erfindung ist eine Prüfstation für eine Vorrichtung zur Oberflächenbearbeitung von Gegenständen mit rundlichem Querschnitt und einer wenigstens teilweise elektrisch leitenden Außenwand, wobei die Prüfstation eine Spannungsquelle, eine mit der Spannungsquelle gekoppelte Elektrode und eine Auswerteeinheit aufweist, wobei die Auswerteeinheit ausgebildet ist, Spannungsänderungen zwischen der Elektrode und einem jeweiligen sich an der Prüfstation befindlichen Gegenstand zu detektieren. Die Prüfstation kann vorzugsweise fortgebildet werden mit den zuvor beschriebenen, auf die Ausbildung der Prüfstation bezogenen Merkmale bzw. Merkmalskombinationen.

Die erfindungsgemäße Prüfstation und ihre Fortbildungen eignen sich insbesondere zur Verwendung in einer Vorrichtung zur Oberflächenbearbeitung von Gegenständen mit rundlichem Querschnitt und einer wenigstens teilweise elektrisch leitenden Außenwand, insbesondere einer vorstehend beschriebenen Vorrichtung oder einer ihrer Fortbildungen.

Ein weiterer Aspekt der Erfindung ist ein eingangs genanntes Verfahren zur Oberflächenbearbeitung von Gegenständen mit rundlichem Querschnitt und einer wenigstens teilweise elektrisch leitenden Außenwand, aufweisend die Schritte: Erzeugen einer Spannung zwischen einer Elektrode und einem jeweiligen sich an einer als Prüfstation ausgebildeten Bearbeitungsstation befindlichen Gegenstand; und Detektieren von Spannungsänderungen zwischen der Elektrode und einem jeweiligen sich an einer als Prüfstation ausgebildeten Bearbeitungsstation befindlichen Gegenstand.

Das erfindungsgemäße Verfahren kann durch den Schritt fortgebildet werden Verwenden von Luft als Dielektrikum zwischen der Elektrode und einem jeweiligen sich an der Prüfstation befindlichen Gegenstand.

Das Verfahren kann weiterhin fortgebildet werden durch den SchrittGenerieren eines Signals, wenn eine Spannungsänderung zwischen der Elektrode und einem jeweiligen sich an der Prüfstation befindlichen Gegenstand detektiert wird und/oder wenn eine zwischen der Elektrode und einem jeweiligen sich an der Prüfstation befindlichen Gegenstand detektierte Spannungsänderung einen bestimmten Grenzwert über- bzw. unterschreitet.

Das Verfahren kann weiterhin fortgebildet werden durch den Schritt Entfernen eines zu bearbeitenden Gegenstands von der jeweiligen Haltevorrichtung, wenn an der Prüfstation eine Spannungsänderung zwischen der Elektrode und dem Gegenstand detektiert wird und/oder wenn eine an der Prüfstation zwischen der Elektrode und dem Gegenstand detektierte Spannungsänderung einen bestimmten Grenzwert über- bzw. unterschreitet.

Das Verfahren ist weiterhin gekennzeichnet durch die Schritte: Einstellen des Abstands zwischen der Elektrode und einem jeweiligen sich an der Prüfstation befindlichen Gegenstand; und Detektieren von Spannungsänderungen zwischen der Elektrode und einem jeweiligen sich an der Prüfstation befindlichen Gegenstand, ohne dass eine Berührung der Elektrode und einem jeweiligen sich an der Prüfstation befindlichen Gegenstand erforderlich ist.

Das Verfahren kann weiterhin dadurch fortgebildet werden, dass die erzeugte Spannung eine Gleichspannung, vorzugsweise eine Hochspannungs-Gleichspannung ist.

Das Verfahren kann weiterhin fortgebildet werden durch den Schritt Erden eines jeweiligen sich an der Prüfstation befindlichen Gegenstands.

Das Verfahren kann weiterhin fortgebildet werden durch den Schritt Rotieren eines gehaltenen Gegenstands um eine Rotationsachse.

Zu den Vorteilen, Ausführungsvarianten und Ausführungsdetails dieser weiteren Aspekte der Erfindung und ihrer Fortbildungen wird auf die zuvor beschriebenen entsprechenden Aspekte der erfindungsgemäßen Vorrichtung verwiesen, die für die entsprechenden weiteren Aspekte der Erfindung relevant sind.

Eine bevorzugte Ausführungsform der Erfindung wird beispielhaft anhand der beiliegenden Figuren beschrieben. Es zeigen:

| | |
|---|---|
| Fig. 1: | Eine schematische Darstellung einer Ausführungsform einer erfindungsgemäßen Prüfstation und einer Getränkedose; |
| Fig. 2: | eine Seitenansicht einer Ausführungsform einer erfindungsgemäßen Prüfstation mit einer Getränkedose; |
| Fig. 3: | eine dreidimensionale Ansicht der in Fig. 2 gezeigten Ausführungsform ohne Getränkedose; |
| Fig. 4a: | die Elektrode der in Fig. 2 und 3 gezeigten Ausführungsform; |
| Fig. 4b: | einen vergrößerten Ausschnitt der in Fig. 4a dargestellten Elektrode; |
| Fig. 5: | eine weitere dreidimensionale Ansicht der in den Fig. 2 und 3 dargestellten Ausführungsform; |
| Fig. 6: | eine Seitenansicht der in den Figuren 2, 3 und 5 dargestellten Ausführungsform und |
| Fig. 7: | eine Rückansicht der in den Figuren 2, 3, 5 und 6 dargestellten Ausführungsform. |

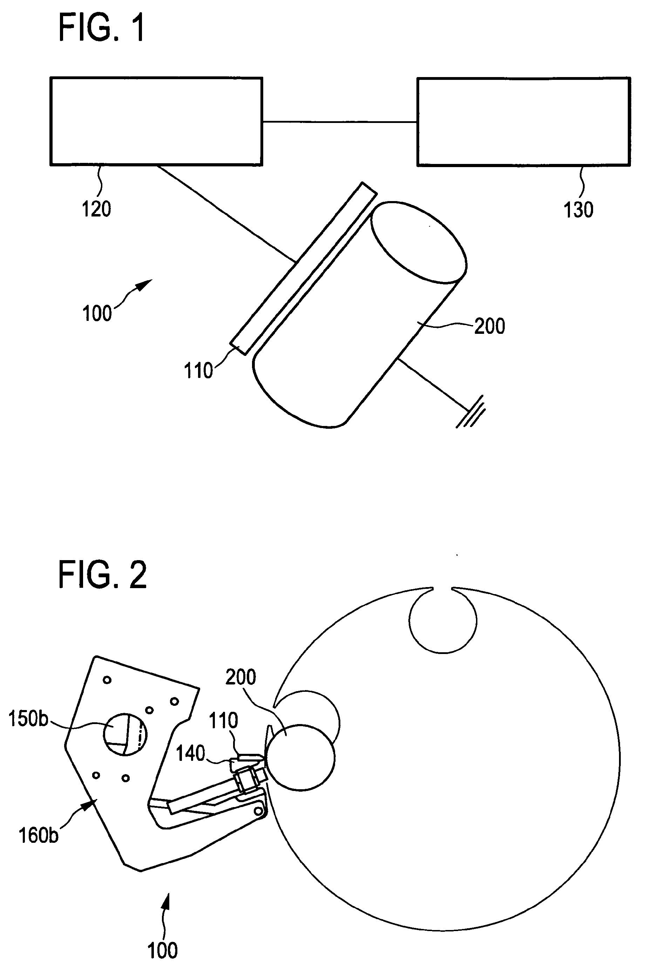

Fig. 1 zeigt, dass die Prüfstation 100 zur Detektion von Oberflächenunregelmäßigkeiten einer Getränkedose 200 eine Elektrode 110 aufweist, die in engem Abstand zur Getränkedose 200 angeordnet und mit einer Gleichspannungsquelle 120 sowie einer Auswerteeinheit 130 verbunden ist. Die Gleichspannungsquelle 120 liefert vorzugsweise eine Hochspannung von ca. 800 V. Die Dose 200 ist geerdet. Zwischen der Elektrode 110 und der Getränkedose 200 befindet sich als Dielektrikum Luft. Erfindungsgemäß wird zwischen der Elektrode 110 und der Getränkedose 200 mittels der Gleichspannungsquelle 120 ein elektrisches Feld aufgebaut, so dass beim Auftreten von Unregelmäßigkeiten in der Oberfläche der Außenwand der Getränkedose 200 eine Spannungsänderung von der Auswerteeinheit 130 detektiert werden kann und somit Oberflächenunregelmäßigkeiten erkannt werden können. Die Auswerteeinheit 130 misst kontinuierlich die an der Elektrode 110 anliegende Hochspannung und stellt Abweichungen in dieser Spannung fest.

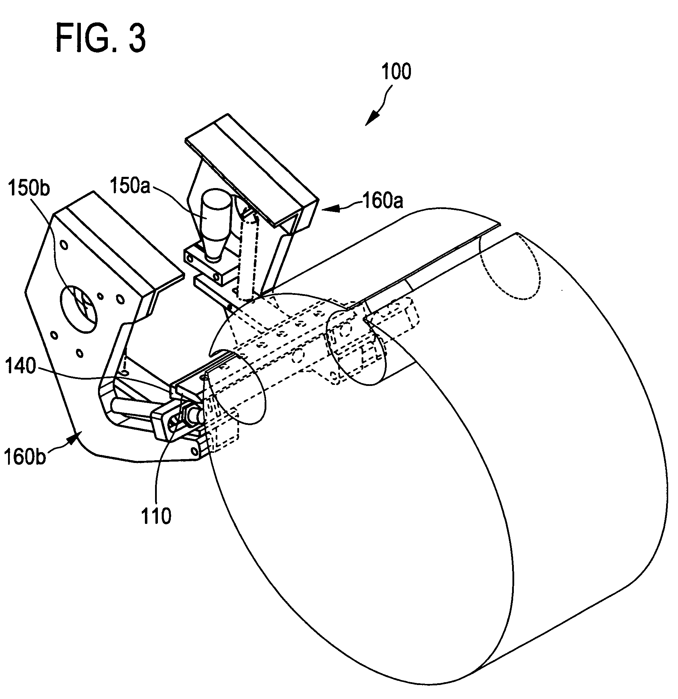

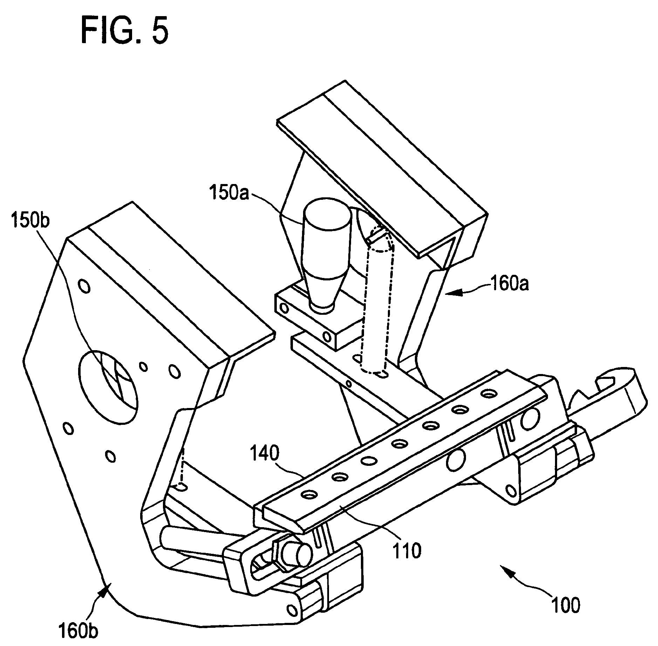

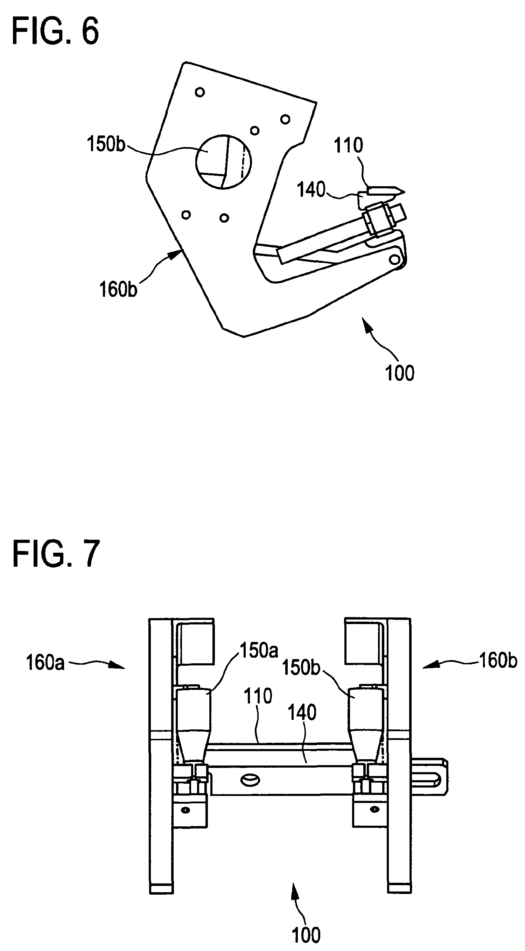

Wie in den Figuren 2, 3 und 5 bis 7 zu erkennen ist, ist die Elektrode 110 auf einem Isolator 140 angebracht, der wiederum in einer Halterung 160a,b gelagert ist. Die Halterung 160a,b weist Mittel 150a,b, beispielsweise Messuhren, zum Einstellen des Abstands zwischen der Elektrode 110 und der Getränkedose 200 auf. Auf diese Weise kann der Abstand der Elektrode 110 von der Getränkedose 200 exakt auf die erforderlichen Rahmenbedingungen eingestellt werden. Der Abstand zwischen der Elektrode 110 und der Getränkedose 200 beträgt vorzugsweise ca. 300 µm.

Die Dose 200 ist vorzugsweise rotierbar gelagert, wobei die Rotationsgeschwindigkeit vorzugsweise 300 U/min beträgt.

Verkleinert sich der Abstand zwischen der Getränkedose 200 und der Messelektrode 110 durch Unregelmäßigkeiten, beispielsweise Auswölbungen der Oberfläche der Außenwand der Getränkedose 200, so kommt es zu Entladungen bzw. einem Überschlag zwischen der Elektrode 110 und der Getränkedose 200, was einen Spannungsabfall zur Folge hat, der von der Auswerteeinheit detektiert wird. Dabei ist es möglich, durch die Abstandsveränderung auch Unregelmäßigkeiten zu detektieren, die kleiner sind als der Abstand zwischen der Elektrode 110 und der Getränkedose 200, d.h. es ist auch eine berührungslose Detektion möglich. Vorzugsweise übermittelt die Auswerteeinheit diese Spannungsänderung über ein Signal an eine übergeordnete Steuerung, vorzugsweise eine speicherprogrammierbare Steuerung (SPS). Die Höhe des Spannungsabfalls, bei dem ein entsprechendes Signal generiert werden soll, ist vorzugsweise einstellbar. Die übergeordnete Steuerung der Vorrichtung initiiert im Falle eines entsprechenden Spannungsabfalls beispielsweise das Entfernen des den Spannungsabfall auslösenden Gegenstands oder eine Unterbrechung des Betriebs der Vorrichtung. Die Zeit zur Detektion einer Oberflächenunregelmäßigkeit beträgt vorzugsweise etwa 1 µs oder weniger.

Das Entfernen eines Gegenstands, insbesondere einer Getränkedose 200, mit Oberflächenunregelmäßigkeiten erfolgt vorzugsweise durch Abblasen der Getränkedose 200 von ihrer Halterung mittels Druckluft.

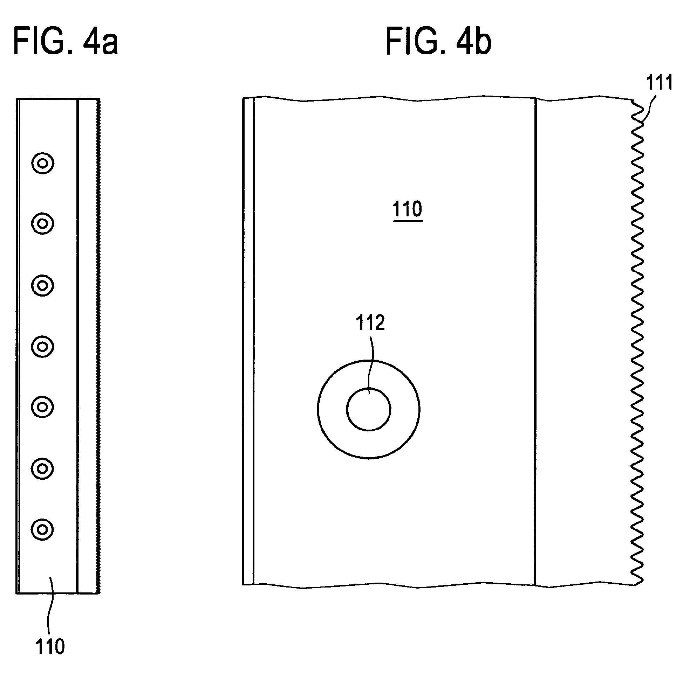

Wie in den Figuren 4a und 4b zu erkennen ist, ist die Elektrode 110 vorzugsweise als Kammelektrode mit einer Vielzahl von Kammspitzen 111 ausgebildet, die vorzugsweise in einem Abstand von ca. 0,5 mm voneinander angeordnet sind. Eine Kammelektrode ist besonders bevorzugt, weil zwischen den Spitzen der Kammelektrode und der Dose ein höheres Potential besteht und die Abstandsveränderung leichter erkannt werden kann. Die Elektrode 110 weist weiterhin Befestigungsmittel 112 zur Befestigung der Elektrode an der Prüfstation, insbesondere an einem Isolator 140, auf. Die Elektrode 110 entspricht in ihrer Längsausdehnung im Wesentlichen der Längsausdehnung der Getränkedose 200, wie in der schematischen Darstellung in Fig. 1 zu erkennen ist.

Vorzugsweise ist weiterhin die Kontur der Elektrode 110 an die Kontur der Getränkedose 200 oder eines anderen Gegenstands angepasst bzw. anpassbar, so dass Gegenstände mit unterschiedlicher Form von der Prüfstation, geprüft werden können.

## Patentansprüche

1. Prüfstation (100) für eine Vorrichtung zur Oberflächenbearbeitung von Gegenständen mit rundlichem Querschnitt und einer wenigstens teilweise elektrisch leitenden Außenwand,
wobei die Prüfstation (100) eine Spannungsquelle, eine mit der Spannungsquelle gekoppelte Elektrode (110) und eine Auswerteeinheit (130) aufweist, wobei die Auswerteeinheit (130) ausgebildet ist, Spannungsänderungen zwischen der Elektrode (110) und einem jeweiligen sich an der Prüfstation (100) befindlichen Gegenstand (200) zu detektieren;
**dadurch gekennzeichnet, dass** die Prüfstation (100) Mittel zum Einstellen des Abstands zwischen der Elektrode (110) und einem jeweiligen sich an der Prüfstation (100) befindlichen Gegenstand (200) aufweist, und
die Prüfstation (100) ausgebildet ist, Spannungsänderungen zwischen der Elektrode (110) und einem jeweiligen sich an der Prüfstation (100) befindlichen Gegenstand (200) zu detektieren, ohne dass eine Berührung der Elektrode (110) und einem jeweiligen sich an der Prüfstation (100) befindlichen Gegenstand (200) erforderlich ist.

2. Prüfstation (100) nach Anspruch 1,
**dadurch gekennzeichnet, dass** als Dielektrikum zwischen der Elektrode (110) und einem jeweiligen sich an der Prüfstation (100) befindlichen Gegenstand (200) Luft verwendet wird.

3. Prüfstation (100) nach einem der Ansprüche 1 bis 2,
**dadurch gekennzeichnet, dass** die Spannungsquelle eine Gleichspannungsquelle (120) ist.

4. Prüfstation (100) nach einem der Ansprüche 1 bis 3,
**dadurch gekennzeichnet, dass** die Elektrode (110) als Kammelektrode mit einer Vielzahl von Kammspitzen (111) ausgebildet ist.

5. Prüfstation (100) nach Anspruch 4,
**dadurch gekennzeichnet, dass** der Abstand zwischen zwei benachbarten Kammspitzen (111) weniger als 1 mm beträgt.

6. Vorrichtung zur Oberflächenbearbeitung von Gegenständen (200) mit rundlichem Querschnitt und einer wenigstens teilweise elektrisch leitenden Außenwand, mit
einer Mehrzahl von Bearbeitungsstationen und
einer Fördervorrichtung mit Haltevorrichtungen zum Halten zu bearbeitender Gegenstände, wobei die Fördervorrichtung ausgebildet ist, von einer jeweiligen Haltevorrichtung gehaltene Gegenstände taktweise von einer Bearbeitungsstation zur nächsten zu transportieren,
**dadurch gekennzeichnet, dass** eine der Bearbeitungsstationen eine Prüfstation (100) nach einem der Ansprüche 1 bis 5 ist.

7. Vorrichtung nach Anspruch 6,
**dadurch gekennzeichnet, dass** die Haltevorrichtung so ausgebildet ist, dass ein jeweiliger von der Haltevorrichtung gehaltener Gegenstand (200) geerdet ist, wenn er sich an der Prüfstation (100) befindet.

8. Verwendung einer Prüfstation (100) nach einem der Ansprüche 1-5 in einer Vorrichtung zur Oberflächenbearbeitung von Gegenständen mit rundlichem Querschnitt und einer wenigstens teilweise elektrisch leitenden Außenwand.

9. Verfahren zur Oberflächenbearbeitung von Gegenständen mit rundlichem Querschnitt und einer wenigstens teilweise elektrisch leitenden Außenwand, umfassend die Schritte:
temporäres Anordnen von zu bearbeitenden Gegenständen an Haltevorrichtungen einer Fördervorrichtung,
taktweises Transportieren der von der jeweiligen Haltevorrichtung gehaltenen Gegenstände von einer Bearbeitungsstation zur nächsten durch die Fördervorrichtung,
Erzeugen einer Spannung zwischen einer Elektrode (110) und einem jeweiligen sich an einer als Prüfstation (100) ausgebildeten Bearbeitungsstation befindlichen Gegenstand (200),
Detektieren von Spannungsänderungen zwischen der Elektrode (110) und einem jeweiligen sich an einer als Prüfstation (100) ausgebildeten Bearbeitungsstation befindlichen Gegenstand (200),
**gekennzeichnet durch** die Schritte:
Einstellen des Abstands zwischen der Elektrode (110) und einem jeweiligen sich an der Prüfstation (100) befindlichen Gegenstand (200),
Detektieren von Spannungsänderungen zwischen der Elektrode (110) und - einem jeweiligen sich an der Prüfstation (100) befindlichen Gegenstand (200), ohne dass eine Berührung der Elektrode (110) und einem jeweiligen sich an der Prüfstation (100) befindlichen Gegenstand (200) erforderlich ist.

10. Verfahren nach dem Anspruch 9,
**gekennzeichnet durch** den Schritt
Verwenden von Luft als Dielektrikum zwischen der Elektrode (110) und einem jeweiligen sich an der Prüfstation (100) befindlichen Gegenstand (200).

11. Verfahren nach einem der Ansprüche 9 bis 10,
**dadurch gekennzeichnet, dass** die erzeugte Spannung eine Gleichspannung.

## Claims

1. Testing station (100) for a device for treating the surfaces of objects with rounded cross-sections and an at least partly electrically conductive outer wall, wherein the testing station (100) comprises a voltage source, an electrode (110) coupled to the voltage source and an evaluation unit (130),
wherein the evaluation unit (130) is configured to detect voltage changes between the electrode (110) and a respective object (200) arranged at the testing station (100):
**characterised in that** the testing station (100) comprises means for adjusting the distance between the electrode (110) and a respective object (200) located at the testing station (100) and the testing station (100) is designed to detect voltage changes between the electrode (110) and a respective object (200) arranged at the testing station (100) without contact between the electrode (110) and an object (200) arranged at the testing station (100) being necessary.

2. Testing station (100) according to claim 1, **characterised in that** air is used as a dielectric material between the electrode (110) and an object (200) arranged at the testing station (100).

3. Testing station (100) according to any one of claims 1 to 2, **characterised in that** the voltage source is a DC voltage source (120).

4. Testing station (100) according to any one of claims 1 to 3, **characterised in that** the electrode (110) is designed as a comb electrode with a plurality of comb tips (111).

5. Testing station (100) according to claim 4, **characterised in that** the distance between two adjacent comb tips (111) is less than 1 mm.

6. Device for treating the surfaces of objects (200) with rounded cross-sections and an at least partly electrically conductive outer wall, comprising
a plurality of processing stations and
a feed device comprising support devices for supporting objects to be treated, wherein the feed device is configured to transport the objects supported by a respective support device in a timed cycle from one treating station to another treating station,
**characterised in that** one of the processing stations is a testing station (100) according to any one of claims 1 to 5.

7. Device according to claim 6, **characterised in that** the support device is designed so that a respective object (200) supported by the support device is earthed when it is arranged at the testing station (100).

8. Use of a testing station (100) according to any one of claims 1-5 in a device for the surface treatment of objects with rounded cross-sections and an at least partly electrically conductive outer wall.

9. Method for treating the surfaces of objects with rounded cross-sections and an at least partly electrically conductive outer wall, comprising the steps of:
temporarily arranging objects to be treated on support devices of a feed device;
transporting the objects supported by the respective support device in cycles from one processing station to the next by the feed device;
generating a voltage between an electrode (110) and a respective object (200) arranged at a processing station configured as a testing station (100),
detecting voltage changes between the electrode (110) and a respective object (200) arranged at a processing station configured as a testing station (200),
**characterised by** the steps:
adjusting the distance between the electrode (110) and a respective object (200) arranged at the testing station (100),
detecting changes in voltage between the electrode (110) and a respective object (200) arranged at the testing station (100) without contact between the electrode (11) and a respective object (200) arranged at the testing station (100) being necessary.

10. Method according to claim 9, **characterised by** the step of using air as a dielectric material between the electrode (110) and a respective object (200) arranged at the testing station (100).

11. Method according to any one of claims 9 to 10, **characterised in that** the voltage generated is a DC voltage.

## Revendications

1. Poste (100) de contrôle d'un dispositif de traitement de surface d'objets ayant une section transversale circulaire et une paroi extérieure conductrice de l'électricité au moins en partie,
dans lequel le poste (100) de contrôle a une source de tension, une électrode (110) connectée à la source de tension et une unité (130) d'exploitation, l'unité (130) d'exploitation étant constituée pour détecter des variations de tension entre l'électrode (110) et un objet (200) respectif se trouvant sur le poste (100) de contrôle ; **caractérisé en ce que** le poste (100) de contrôle a des moyens de réglage de la distance entre l'électrode (110) et un objet (200) respectif se trouvant sur le poste (100) de contrôle et
le poste (100) de contrôle est constitué pour détecter les variations de tension entre l'électrode (110) et un objet (200) respectif se trouvant sur le poste (100) de contrôle sans qu'un contact entre l'électrode (110) et un objet (200) respectif se trouvant sur le poste (100) de contrôle soit nécessaire.

2. Poste (100) de contrôle suivant la revendication 1,
**caractérisé en ce qu'**il est utilisé de l'air comme diélectrique entre l'électrode (110) et un objet (200) respectif se trouvant sur le poste (100) de contrôle.

3. Poste (100) de contrôle suivant l'une des revendications 1 à 2,
**caractérisé en ce que** la source de tension est une source (120) de tension continue.

4. Poste (100) de contrôle suivant l'une des revendications 1 à 3,
**caractérisé en ce que** l'électrode (110) est constituée sous la forme d'une électrode en peigne ayant une pluralité de pointes (111) de peigne.

5. Poste (100) de contrôle suivant la revendication 4,
**caractérisé en ce que** la distance entre deux points (111) de peigne voisine est plus petite que 1 mm.

6. Dispositif de traitement de surface d'objets (200) ayant une section transversale circulaire et une paroi extérieure conductrice de l'électricité au moins en partie, comprenant une pluralité de postes de traitement et
un dispositif de convoyage ayant des dispositifs de maintien pour maintenir des objets à traiter, le dispositif de convoyage étant constitué pour transporter des objets maintenus par un dispositif de maintien respectif en cadence d'un poste de traitement au suivant, **caractérisé en ce que** l'un des postes de traitement est un poste (100) de contrôle suivant l'une des revendications 1 à 5.

7. Dispositif suivant la revendication 6,
**caractérisé en ce que** le dispositif de maintien est constitué de manière à ce qu'un objet (200) respectif maintenu par le dispositif de maintien soit mis à la terre s'il se trouve au poste (100) de contrôle.

8. Utilisation d'un poste (100) suivant l'une des revendications 1 à 5 dans un dispositif de traitement de surface d'objets ayant une section transversale circulaire et une paroi extérieure conductrice de l'électricité au moins en partie.

9. Procédé de traitement de surface d'objets ayant une section transversale circulaire et une paroi extérieure conductrice de l'électricité au moins en partie, comprenant les stades :
on met temporairement des objets à traiter sur des dispositifs de maintien d'un dispositif convoyeur,
on transporte en cadence les objets maintenus par le dispositif de maintien respectif d'un poste de traitement au suivant par le dispositif convoyeur,
on produit une tension entre une électrode (110) et un objet (200) respectif se trouvant à un poste de traitement constitué en poste (100) de contrôle,
on détecte des variations de tension entre l'électrode (110) et un objet (200) respectif se trouvant sur un poste de traitement constitué en poste (100) de contrôle,
**caractérisé par** les stades :
on règle la distance entre l'électrode (110) et un objet (200) respectif se trouvant sur le poste (100) de contrôle, on détecte des variations de tension entre l'électrode (110) et un objet (200) respectif se trouvant sur le poste (100) de contrôle sans qu'un contact entre l'électrode (110) et un objet (200) respectif se trouvant sur le poste (100) de contrôle soit nécessaire.

10. Procédé suivant la revendication 9,
**caractérisé par** le stade
on utilise de l'air comme diélectrique entre l'électrode (110) et un objet (200) respectif se trouvant sur le poste (100) de contrôle.

11. Procédé suivant l'une des revendications 9 à 10, **caractérisé en ce que** la tension produite est une tension continue.
